# EUROPEAN PATENT SPECIFICATION

(11) **EP 0 867 095 B1**
(45) Date of publication and mention of the grant of the patent: **31.10.2001**
(21) Application number: 96942470.4
(22) Date of filing: 16.12.1996
(51) Int. Cl.: H04Q 7/20, H04Q 7/38

(54) **ENABLING A SUBSCRIBER UNIT IN A RADIO NETWORK**
ZULASSUNG EINES TEILNEHMERS IN EINEM FUNKNETZWERK
VALIDATION D'UN POSTE D'ABONNE

(30) Priority: 14.12.1995 GB 9525510; 16.01.1996 GB 9600867; 03.10.1996 GB 9620641
(43) Date of publication of application: 30.09.1998
(73) Proprietor: Ionica International Limited, Cambridge CB4 4AS (GB)
(72) Inventor: MARTIN, Paul, Maxwell, Newmarket, Suffolk CB8 9XS (GB); GOODINGS, Rupert, Leslie, Alexander, Cambridge CB4 1DD (GB); SHORE, Christopher, John, Cambridge CB4 1UP (GB)
(74) Representative: Hogg, Jeffery Keith
(86) International application number: GB9603112
(87) International publication number: WO9722215

(56) References cited:
- EP-A- 0 475 698
- EP-A- 0 641 135
- WO-A-92/08324
- WO-A-95/24810
- US-A- 4 811 420
- IEEE TRANSACTIONS ON COMMUNICATIONS, vol. 39, no. 2, 1 February 1991, pages 324-335, XP000225310 COX D C: "A RADIO SYSTEM PROPOSAL FOR WIDESPREAD LOW-POWER TETHERLESS COMMUNICATIONS"

## Description

The present invention relates to a method of enabling a subscriber unit, and communication means.

Once a subscriber unit has been enabled in a network, call set-up requests to or from a subscriber unit can be accepted by the network according to known call set-up procedure such as described in W092/08324.

The present invention is defined in the claims to which reference should now be made. Preferred features are laid out in the sub claims.

In a preferred embodiment, the present invention provides a method of enabling a subscriber unit in a network of base stations and subscriber units, in which messages are transmitted between base stations and subscriber units in predetermined time slots within fixed length time frames, comprising the steps of the base station initially refusing call set-up requests from a first subscriber unit, the base station testing the quality of communications to and/or from said first subscriber unit, and dependent on said quality enabling call set-up requests to or from the first subscriber unit to be accepted by the base stations.

The base station preferably initially receives a message from the subscriber unit indicating the identity of the subscriber unit if not previously recognised by that base station. The identity can be temporary. Preferably, if quality is determined to be acceptable, the base station sends to said first subscriber unit validation check messages to determine whether the first subscriber unit is of acceptable type and/or configuration messages to control performance of said first subscriber unit.

Transmission of system control messages is possible before a subscriber unit is validated, but attempts at fraudulent use such as attempting to use stolen subscriber units for free voice or data calls will not be successful. The system control messages are preferably link maintenance messages and/or messages for installation such as validation and/or configuration set-up messages. The system control messages are preferably addressed to said first subscriber unit by including an identification code of the first subscriber unit. The configuration set-up messages can include information of the preferred order in which available RF carrier frequencies are to be used, for example to minimise interference.

The configuration set-up messages can include information of which RF carrier frequencies are preferred for use, which are less preferred for use and which are not to be used. The call set-up requests are preferably Public Switched Telephone Network (PSTN) call set-up requests and/or Integrated Services Digital Network (ISDN) call set-up requests.

The quality of message communications is tested by measuring at least one signal parameter in the direction of base station to subscriber unit and/or vice versa. The signal parameter (s) measured can be any selection of, or all of subscriber received signal power (RSSI), forward error correction (FEC), Cyclic Redundancy Check (CRC), vector error in demodulation, for example in π/4 DQPSK demodulation.

If the quality of message communications is found to be insufficient, another base station is selected to receive messages from said first subscriber unit and the method of installing the subscriber unit is repeated in respect of said another base station. This can be repeated a number of times until a sufficient quality of message communications is determined and said first subscriber unit is accepted as valid.

The present invention also relates to corresponding communication means.

The present invention also relates to communication means comprising a base station and plurality of subscriber units, the base station communicating with each subscriber unit by sending and receiving messages in predetermined time slots within fixed length time frames, in which the base station for a predetermined time refuses call set-up requests from a first subscriber unit, and for a predetermined time sends system control messages to the subscriber unit, the base station testing the quality of communications to and/or from said first subscriber unit and dependent on said quality enabling call set-up requests to or from said first subscriber unit to be accepted.

A preferred embodiment of the present invention will now be described, by way of example, with reference to the drawings in which:
Figure 1 is a schematic diagram illustrating the system including a base station (BTE - Base Terminating Equipment) and subscriber unit (NTE - Network Terminating Equipment),
Figure 2 is a diagram illustrating frame structure and timing for a duplex link,
Figure 3a is a diagram illustrating the sequence of 'guest' then 'formal' 'attachments' of a subscriber unit to a base station.
Figure 3b is a diagram illustrating the messages sent between the base station and subscriber unit in the 'guest attachment' phase and 'formal attachment' phase shown in Figure 3a.

### The Basic System

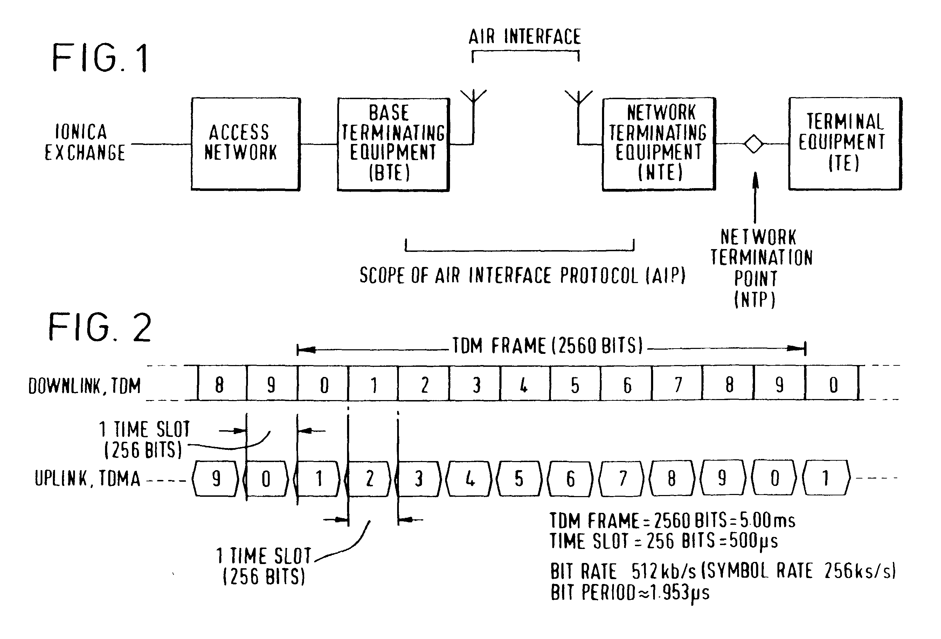

As shown in Figure 1, the preferred system is part of a telephone system in which the local wired loop from exchange to subscriber has been replaced by a full duplex radio link between a fixed base station and fixed subscriber unit. The preferred system includes the duplex radio link, and transmitters and receivers for implementing the necessary protocol. There are similarities between the preferred system and digital cellular mobile telephone systems such as GSM which are known in the art. This system uses a protocol based on a layered model, in particular the following layers; PHY (Physical), MAC (Medium Access Control), DLC (Data Link Control), NWK (Network).

One difference compared with GSM is that, in the preferred system, subscriber units are at fixed locations and there is no need for hand-off arrangements or other features relating to mobility. This means, for example, in the preferred system directional antennae and mains electricity can be used.

Each base station in the preferred system provides six duplex radio links at twelve frequencies chosen from the overall frequency allocation, so as to minimise interference between base stations nearby. The frame structure and timing for the duplex link is illustrated in Figure 2. Each duplex radio link comprises an up-link from a subscriber unit to a base station and, at a fixed frequency offset, a down-link from the base station to the subscriber unit. The down-links are TDM, and the up-links are TDMA. Modulation for all links is π/4 - DQPSK, and the basic frame structure for all links is ten slots per frame of 2560 bits i.e. 256 bits per slot. The bit rate is 512kbps. Down-links are continuously transmitted and incorporate a broadcast channel for essential system information. When there is no user information to be transmitted, the down-link transmissions continue to use the basic frame and slot structure and contain a suitable fill pattern.

For both up-link and down-link transmissions, there are two types of slot: normal slots which are used after call set-up, and pilot slots used during call set-up.

Each down-link normal slot comprises 24 bits of synchronisation information followed by 24 bits designated S-field which includes an 8 bit header, followed by 160 bits designated D-field. This is followed by 24 bits of Forward Error Correction and an 8 bit filler, followed by 12 bits of the broadcast channel. The broadcast channel consists of segments in each of the slots of a frame which together form the down-link common signalling channel which is transmitted by the base station, and contains control messages containing link information such as slot lists, multi-frame and super-frame information, connectionless messages and other information basic to the operation of the system.

During call set-up, each down-link pilot slot contains frequency correction data and a training sequence for receiver initialisation, with only a short S-field and no D-field information.

Up-link slots basically contain two different types of data packet. The first type of packet, called a pilot packet, is used before a connection is set up, for example, for an ALOHA call request and to allow adaptive time alignment. The other type of data packet, called a normal packet, is used when a call has been established and is a larger data packet, due to the use of adaptive time alignment.

Each up-link normal packet contains a data packet of 244 bits which is preceded and followed by a ramp of 4 bits duration. The ramps and the remaining bits left of the 256 bit slot provide a guard gap against interference from neighbouring slots due to timing errors. Each subscriber unit adjusts the timing of its slot transmissions to compensate for the time it takes signals to reach the base station. Each up-link normal data packet comprises 24 bits of synchronisation data followed by an S-field and D-field of the same number of bits as in each down-link normal slot.

Each up-link pilot slot contains a pilot data packet which is 192 bits long preceded and followed by 4 bits ramps defining an extended guard gap of 60 bits. This larger guard gap is necessary because there is no timing information available and without it propagation delays would cause neighbouring slots to interfere. The pilot packet comprises 64 bits of sync followed by 104 bits of S-field which starts with an 8 bit header and finishes with a 16 bit Cyclic Redundancy Check, 2 reserved bits, 14 FEC bits, and 8 tail bits. There is no D-field.

The S-field in the above mentioned data packets can be used for two types of signalling. The first type is MAC signalling (MS) and is used for signalling between the MAC layer of the base station and the MAC layer of a subscriber unit whereby timing is important. The second type is called associated signalling, which can be slow or fast and is used for signalling between the base station and subscriber units in the DLC or NWK layers.

The D-field is the largest data field, and in the case of normal telephony contains digitised speech, but can also contain a non-speech data samples.

Provision is made in the preferred system for subscriber unit authentication using a challenge response protocol. General encryption is provided by combining the speech or data with a non-predictable sequence of cipher bits produced by a key stream generator which is synchronised to the transmitted super-frame number.

In addition, the transmitted signal is scrambled to remove dc components.

### Guest Attachment

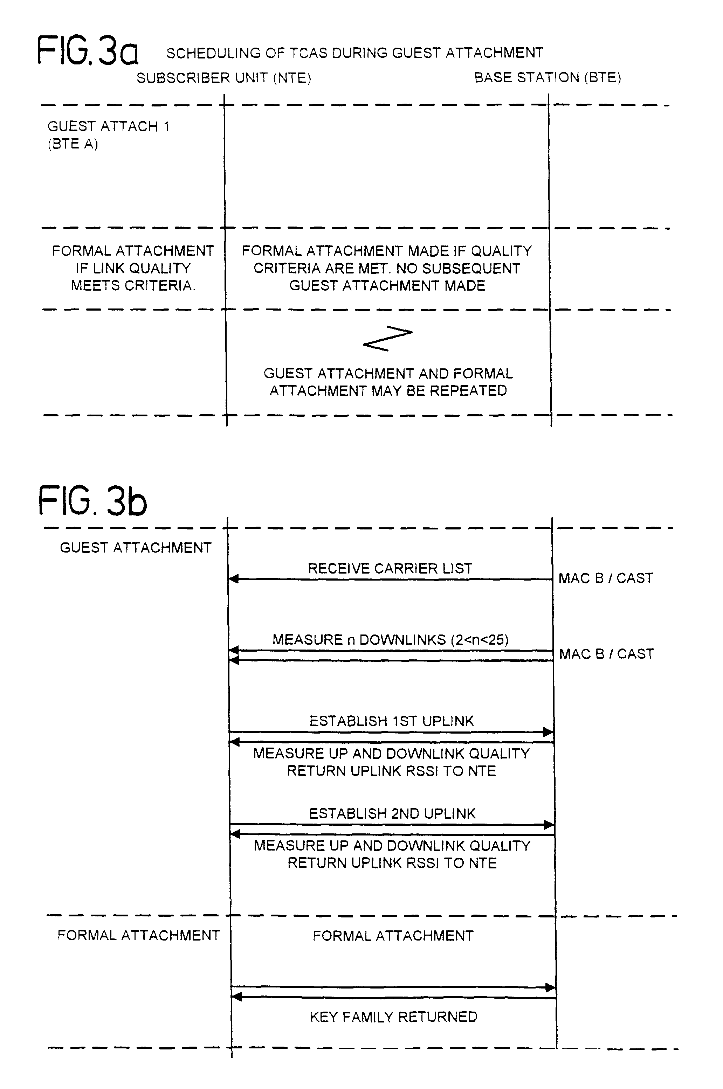

A subscriber unit is installed in the preferred network so as to communicate with a single base station. There are a series of stages to the installation process illustrated broadly in Figure 3a and in more detail in Figure 3b.

Before the Guest Attachment sequence of messages, the subscriber unit to be installed measures the quality of signals received from the base station (ie downlink), namely the received signal strengths, CRC and FEC errors.

The Guest Attachment sequence is undertaken as shown in Figure 3a. If the communications are of sufficient quality, assuming the subscriber unit is checked and found to have an acceptable identification, the attachment is formalised. Otherwise a guest attachment to another base station is made to determine whether that attachment could be formalised.

The Guest Attachment phase involves communications uplink (subscriber unit to base station) and downlink (base station to subscriber unit).

As shown in more detail in Figure 3b, the guest attachment process involves the steps of:
(1) the subscriber unit receiving the list identifying radio frequencies available at the base station,
(2) this subscriber unit measuring the signal quality of received signals on at least some of the possible radio frequencies available at the base station,
(3) the subscriber unit selecting a radio frequency for transmission and automatically establishing a preliminary connection to the base station, using the temporary identity of the subscriber unit, for the sole purpose of exchanging system control messages,
(4) during the preliminary connection, both base station and subscriber unit detecting quality of respective received signals, and the base station transmits a quality result to the subscriber unit and the preliminary connection being terminated thereafter.

Steps (3) and (4) can be repeated for various selected frequencies for transmission to determine which frequencies provide sufficient call quality that they can be used.

If signal quality on at least one radio frequency has been determined as satisfactory, then the subscriber unit sets up another preliminary connection on one of the acceptable frequencies during which the subscriber unit accepts a permanent identifier from the base station so as to identify the subscriber unit within the network for user initiated calls. This is the formal attachment process.

During the whole attachment process, call set-up requests, such PSTN and other user-initiated services are not allowed via that subscriber unit. However, once attached, call set-up requests to or from the subscriber unit are accepted.

If none of the radio frequencies are found to be satisfactory by the guest attachment process, the subscriber unit repeats the attachment process to a different base station until it attaches successfully.

## Claims

1. A method of enabling communications with a subscriber unit in a network of base stations and subscriber units, in which messages are transmitted between base stations and subscriber units in predetermined time slots within fixed length time frames, comprising the step of a base station for a time sending system control messages to the subscriber unit and in that time refusing call set-up requests, if any, to and/or from the subscriber unit, the base station testing quality of communications from the subscriber unit and the subscriber unit testing quality of communications to the base station, and dependent on the quality in both directions enabling call set-up requests to or from the subscriber unit to be accepted by the base station.

2. A method of enabling communications according to claim 1, in which the subscriber unit communicates with at most one base station at a time.

3. A method of enabling communications according to claim 1 or claim 2, in which the base station receives a message from the subscriber unit including an identifier indicating the identity of the subscriber unit if not previously recognised by the base station, the identity being usable for routing of system control messages to the subscriber unit.

4. A method of enabling communications according to claim 3, in which the identity is temporary.

5. A method of enabling communications according to any preceding claim, in which if quality is determined to be acceptable, the first base station sends further system control messages to the subscriber unit.

6. A method of enabling communications according to claim 5, in which the further system control messages comprising validation check messages to determine whether the subscriber unit is of acceptable type.

7. A method of enabling communications according to claim 5 or claim 6, in which the further system control messages comprising configuration messages to control performance of the subscriber unit.

8. A method of enabling communications according to claim 7, in which the configuration messages include information of the preferred order in which available RF carrier frequencies are to be used.

9. A method of enabling communications according to claim 7 or claim 8, in which the configuration messages include information of which RF carrier frequencies are preferred for use, which are less preferred for use and which are not to be used.

10. A method of enabling communications according to any of claims 5 to 9, in which the further system control messages comprise link maintenance messages.

11. A method of enabling communications according to any of claims 5 to 10, in which the further system control messages are addressed to the subscriber unit by including the identifier of the subscriber unit.

12. A method of enabling communications according to any of claims 5 to 11, in which the further system control messages include a permanent identifier which is accepted by the subscriber unit for routing of subsequent call set-up requests, the base station storing the permanent identifier and accepting those of the subsequent call set-up requests which include the permanent identifier.

13. A method of enabling communications according to any preceding claim, in which the call set-up requests are Public Switched Telephone Network (PSTN) call set-up requests and/or Integrated Services Digital Network (ISDN) call set-up requests.

14. A method of enabling communications according to any preceding claim, in which the quality of message communications is tested in the direction of base station to subscriber unit and/or in the opposite direction by measuring at least one signal parameter to determine whether the parameter value exceeds a predetermined threshold.

15. A method of enabling communications according to claim 14, in which the at least one signal parameter measured is any selection or all of: subscriber received signal power (RSSI), forward error correction (FEC), Cyclic Redundancy Check (CRC), vector error in demodulation.

16. A method of enabling communications according to any preceding claim, in which if the quality of communications is found to be insufficient, a different transmission frequency to the base station and a different transmission frequency to the subscriber unit are selected and the method of enabling communications with the subscriber unit is performed using the new frequencies.

17. A method of enabling communications according to claim 16, in which repeatedly different transmission frequencies are selected and the method of enabling communications with the subscriber unit is performed with transmissions at the selected frequencies until a sufficient quality of message communications is determined.

18. A method of enabling communications according to any preceding claim, in which if the quality of communications is found to be insufficient, another one of the base stations is selected to receive messages from said subscriber unit and the method of enabling communications with the subscriber unit is performed in respect of said another base station.

19. A method of enabling communications according to claim 18, in which repeatedly a further one of the base stations is selected and the method of enabling communications with a subscriber unit is performed in respect of the selected further base station until a sufficient quality of message communications is determined.

20. Communication means comprising a base station and plurality of subscriber units, the base station communicating with each subscriber unit by sending and receiving messages in predetermined time slots within fixed length time frames, in which the base station is operative for a predetermined time to refuse call set-up requests to and/or from a first subscriber unit, and for a predetermined time to send system control messages to the subscriber unit, the base station further being operative to test the quality of communications from said first subscriber unit and the first subscriber unit being operative to test the quality of communications from base station, and dependent on the quality in both directions to enable call set-up requests to or from said first subscriber unit to be accepted.

21. Communication means according to claim 20, in which if quality is determined to be acceptable, the base station sends further system control messages to the first subscriber unit.

22. Communication means according to claim 21, in which the further system control messages comprise validation check messages to determine whether the first subscriber unit is of acceptable type.

23. Communication means according to claim 21 or claim 22, in which the further system control messages comprise configuration messages to control performance of the first subscriber unit.

24. Communication means according to any of claims 21 to 23, in which the further system control messages are addressed to the first subscriber unit by including an identification code of the first subscriber unit.

25. Communications means according to any of claims 20 to 24, in which if the quality of communications is found to be insufficient, a different transmission frequency to the base station and a different transmission frequency to the subscriber unit are selected and the quality of communications using the new frequencies is tested.

26. Communication means according to any of claims 20 to 25, further comprising another base station in which if the quality of communications with the first base station is found to be insufficient, said another base station is selected to receive messages from the first subscriber unit and the quality of communications between the subscriber unit and said another base station is tested.

## Patentansprüche

1. Verfahren zum Bereitschalten der Kommunikation mit einer Teilnehmereinheit in einem Netz aus Basisstationen und Teilnehmereinheiten, bei dem Meldungen zwischen den Basisstationen und den Teilnehmereinheiten in vorbestimmten Zeitintervallen innerhalb von Zeitrahmen fester Länge gesendet werden, bei dem weiterhin eine Basisstation für eine gewisse Zeit Systemkontrollmeldungen zur Teilnehmereinheit sendet und währenddessen ggf. eintreffende Verbindungsanforderungen zur und von der Teilnehmereinheit verweigert werden und bei dem die Basisstation die Qualität der Kommunikation von der Teilnehmereinheit her und die Teilnehmereinheit die Qualität der Kommunikation zur Basisstation testen und angeforderte Verbindungen zur oder von der Teilnehmereinheit abhängig von der Qualität in beiden Richtungen durch die Basisstation freigeschaltet werden.

2. Verfahren nach Anspruch 1, bei dem die Teilnehmereinheit jeweils mit höchstens einer Basisstation kommuniziert.

3. Verfahren nach Anspruch 1 oder 2, bei dem die Basisstation von der Teilnehmereinheit eine Meldung empfängt, die eine Kennung enthält, die die Teilnehmereinheit identifiziert, sofern diese von der Basisstation nicht bereits erkannt wurde, wobei die Identität zum Weiterleiten von Systemkontrollmeldungen an die Teilnehmereinheit nutzbar ist.

4. Verfahren nach Anspruch 3, bei dem die Identität vorübergehend ist.

5. Verfahren nach einem der vorgehenden Ansprüche, bei dem, falls die Qualität als akzeptabel befunden wird, die erste Basisstation weitere Systemkontrollmeldungen an die Teilnehmereinheit sendet.

6. Verfahren nach Anspruch 5, bei dem die weiteren Systemkontrollmeldungen Validierungsprüfmeldungen enthalten, um zu bestimmen, ob die Teilnehmereinheit zu einem akzeptablen Typ gehört.

7. Verfahren nach Anspruch 5 oder 6, bei dem die weiteren Systemkontrollmeldungen Konfigurationsmitteilungen zur Steuerung des Arbeitsverhaltens der Teilnehmereinheit beinhalten.

8. Verfahren nach Anspruch 7, bei dem die Konfigurationsmitteilungen Informationen über die bevorzugte Reihenfolge der Nutzung verfügbarer HF-Trägerfrequenzen enthalten.

9. Verfahren nach Anspruch 7 oder 8, bei dem die Konfigurationsmitteilungen Informationen über diejenigen HF-Trägerfrequenzen enthalten, die zur Benutzung bevorzugt oder weniger bevorzugt sind oder die nicht benutzt werden sollen.

10. Verfahren nach einem der Ansprüche 5 bis 9, bei dem die weiteren Systemkontrollmeldungen Streckenerhaltungsmeldungen enthalten.

11. Verfahren nach einem der Ansprüche 5 bis 10, bei dem die weiteren Systemkontrollmeldungen an die Teilnehmereinheit adressiert werden, indem sie deren Identifikator beinhalten.

12. Verfahren nach Anspruch 5 bis 11, bei dem die weiteren Systemkontrollmeldungen einen permanenten Identifikator enthalten, den die Teilnehmereinheit zum Weiterleiten nachfolgender Verbindungsanforderungen akzeptiert, wobei die Basisstation den permanenten Identifikator speichert und diejenigen der folgenden Verbindungsanforderungen akzeptiert, die den permanenten Identifikator enthalten.

13. Verfahren nach einem der vorgehenden Ansprüche, bei dem es sich bei den Verbindungsanforderungen um solche aus dem bzw. an das öffentliche Fernsprechwähl- und/oder ISDN-Netz handelt.

14. Verfahren nach einem der vorgehenden Ansprüche, bei dem die Güte der Übertragung der Meldungen von der Basisstation zur Teilnehmereinheit und/oder in der Gegenrichtung geprüft wird durch Messen mindestens eines Signalparameters zur Bestimmung, ob der Parameterwert einen vorbestimmten Schwellwert übersteigt.

15. Verfahren nach Anspruch 14, bei dem der eine oder die gemessenen Parameter gewählt sind aus der an der Teilnehmereinheit empfangenen Signalleistung (RSSI), Vorwärtsfehlerkorrektur (FEC), zyklische Redundanz (CRC) und Demodulations-Vektorfehler, wobei ggf. auch alle diese Parameter gemessen werden.

16. Verfahren nach einem der vorgehenden Ansprüche, bei dem, falls die Qualität der Übertragung als ungenügend befunden wird, zur Basisstation und zur Teilnehmereinheit jeweils eine andere Sendefrequenz gewählt und das Verfahren zum Bereitschalten der Kommunikation mit der Teilnehmereinheit unter Benutzung der neuen Frequenzen ausgeführt wird.

17. Verfahren nach Anspruch 16, bei dem wiederholt unterschiedliche Sendefrequenzen gewählt werden und das Verfahren zum Bereitschalten der Kommunikation mit der Teilnehmereinheit mit Aussendungen auf den gewählten Frequenzen durchgeführt wird, bis sich eine ausreichende Qualität der Meldungsübertragung ergibt wird.

18. Verfahren nach einem der vorgehenden Ansprüche, bei dem, falls die Qualität der Übertragung als ungenügend befunden wird, zum Empfang der Meldungen der Teilnehmereinheit eine andere de Basisstationen ausgewählt und das Verfahren zum Bereitschalten der Kommunikation mit der Teilnehmereinheit bezüglich der anderen Basisstation durchgeführt wird.

19. Verfahren nach Anspruch 18, bei dem wiederholt eine weitere der Basisstationen ausgewählt und das Verfahren zum Bereitschalten der Kommunikation mit einer Teilnehmereinheit bezüglich der gewählten weiteren Basisstation durchgeführt wird, bis sich eine ausreichende Qualität der Übertragung ergibt.

20. Kommunikationsanordnung mit einer Basisstation und einer Vielzahl von Teilnehmerstationen, wobei die Basisstation mit jeder Teilnehmereinheit durch Senden und Empfangen von Meldungen in vorbestimmten Zeitintervallen innerhalb von Zeitrahmen fester Länge kommuniziert, wobei die Basisstation für eine vorbestimmte Zeit Verbindungsanforderungen von und/oder zu einer ersten Teilnehmereinheit zurückweist und für eine vorbestimmte Zeit Systemkontrollmeldungen an die Teilnehmereinheit sendet, und wobei die Basisstation die Basisstation und die erste Teilnehmereinheit die Qualität der Meldungen aus der ersten Teilnehmereinheit bzw. der Basisstation prüfen und abhängig von der Qualität in beiden Richtungen die Annahme von Verbindungsanforderungen zur oder von der ersten Teilnehmereinheit freischalten.

21. Anordnung nach Anspruch 20, bei der, falls die Qualität für akzeptabel befunden wird, die Basisstation weitere Systemkontrollmeldungen an die erste Teilnehmereinheit sendet.

22. Anordnung nach Anspruch 21, bei dem die weiteren Systemkontrollmeldungen Validierungsprüfmitteilungen enthalten zur Bestimmung, ob die erste Teilnehmereinheit zu eine akzeptablen Typ gehört.

23. Anordnung nach Anspruch 21 oder 22, bei dem die weiteren Systemkontrollmeldungen Konfigurationsmitteilungen zum Steuern des Arbeitsverhaltens der ersten Teilnehmereinheit enthalten.

24. Anordnung nach einem der Ansprüche 21 bis 23, bei dem die weiteren Systemkontrollmeldungen an die erste Teilnehmereinheit adressiert sind, indem sie einen Identifikationskode derselben enthalten.

25. Anordnung nach einem der Ansprüche 20 bis 24, bei dem, falls die Qualität der Kommunikation für ungenügend befunden wird, andere Sendefrequenzen zur Basisstation und zur Teilnehmereinheit ausgewählt werden und die Qualität der Kommunikation unter Benutzung der neuen Frequenzen geprüft wird.

26. Anordnung nach einem der Ansprüche 20 bis 25, bei dem eine weitere Basisstation vorgesehen ist, die, falls die Qualität der Kommunikation mit der ersten Basisstation für ungenügend befunden wird, zum Empfang von Meldungen der ersten Teilnehmereinheit ausgewählt wird, wobei die Qualität der Kommunikation zwischen der Teilnehmereinheit und der weiteren Basisstation geprüft wird.

## Revendications

1. Procédé de validation de communications avec un poste d'abonné dans un réseau de stations de base et de postes d'abonnés, selon lequel des messages sont transmis entre des stations de base et des postes d'abonnés en tranches de temps prédéterminées dans des séquences de temps de longueur fixe, comprenant la phase où une station de base envoie à un moment des messages de contrôle de système au poste d'abonné et, à ce moment, refuse des demandes d'établissement d'appel, s'il y a lieu, vers et/ou depuis le poste d'abonné, la station de base vérifiant la qualité des communications provenant du poste d'abonné et le poste d'abonné vérifiant la qualité des communications vers la station de base, et, selon la qualité dans les deux directions, permettant aux demandes d'établissement d'appel vers ou depuis le poste d'abonné d'être acceptées par la station de base.

2. Procédé de validation de communications selon la revendication 1, dans lequel le poste d'abonné communique avec au plus une station de base à la fois.

3. Procédé de validation de communications selon la revendication 1 ou la revendication 2, dans lequel la station de base reçoit un message depuis le poste d'abonné comprenant un moyen d'identification indiquant l'identité du poste d'abonné si ce dernier n'a pas été antérieurement reconnu par la station de base, l'identité étant utilisable pour l'acheminement de messages de contrôle de système vers le poste d'abonné.

4. Procédé de validation de communications selon la revendication 3, dans lequel l'identité est temporaire.

5. Procédé de validation de communications selon l'une quelconque des revendications précédentes dans lequel, si la qualité est considérée acceptable, la première station de base envoie des messages supplémentaires de contrôle de système au poste d'abonné.

6. Procédé de validation de communications selon la revendication 5, dans lequel les messages supplémentaires de contrôle de système comprennent des messages de vérification de validation pour déterminer si le poste d'abonné est de type acceptable.

7. Procédé de validation de communications selon la revendication 5 ou la revendication 6, dans lequel les messages supplémentaires de contrôle de système comprennent des messages de configuration pour contrôler la performance du poste d'abonné.

8. Procédé de validation de communications selon la revendication 7, dans lequel les messages de configuration comportent de l'information d'ordre préféré dans laquelle sont utilisées des fréquences porteuses RF disponibles.

9. Procédé de validation de communications selon la revendication 8, dans lequel les messages de configuration comprennent de l'information dont les fréquences porteuses RF sont d'utilisation préférée, sont d'utilisation moins préférée, et ne sont pas à utiliser.

10. Procédé de validation de communications selon l'une quelconque des revendications 5 à 9, dans lequel les messages supplémentaires de contrôle de système comprennent des messages d'entretien de la liaison.

11. Procédé de validation de communications selon l'une quelconque des revendications 5 à 10, dans lequel les messages supplémentaires de contrôle de système sont adressés au poste d'abonné en y incluant le moyen d'identification du poste d'abonné.

12. Procédé de validation de communications selon l'une quelconque des revendications 5 à 11, dans lequel les messages supplémentaires de contrôle de système comprennent un moyen d'identification permanent qui est accepté par le poste d'abonné pour acheminer des demandes d'établissement d'appel, la station de base emmagasinant le moyen d'identification permanent et acceptant celles des demandes d'établissement d'appel qui comprennent le moyen d'identification permanent.

13. Procédé de validation de communications selon l'une quelconque des revendications précédentes, dans lequel les demandes d'établissement d'appel sont des demandes d'établissement d'appel du Public Switched Telephone Network (PSTN) et/ou des demandes d'établissement d'appel du Integrated Services Digital Network (ISDN).

14. Procédé de validation de communications selon l'une quelconque des revendications précédentes, dans lequel la qualité des communications de messages est vérifiée, dans la direction station de base vers poste d'abonné et/ou dans la direction opposée, en mesurant au moins un paramètre du signal pour déterminer si la valeur du paramètre dépasse un seuil prédéterminé.

15. Procédé de validation de communications selon la revendication 14, dans lequel ledit au-moins un paramètre de signal mesuré est constitué par toute sélection parmi, ou par la totalité de, puissance du signal reçu par l'abonné (RSSI), correction d'erreur de transmission (FEC), vérification de répétition cyclique (CRC), erreur de vecteur en démodulation.

16. Procédé de validation de communications selon l'une quelconque des revendications précédentes dans lequel, si la qualité des communications est considérée comme étant insuffisante, on choisit une fréquence de transmission différente vers la station de base et une fréquence de transmission différente vers le poste d'abonné et on met en oeuvre le procédé de validation des communications avec le poste d'abonné en utilisant les nouvelles fréquences.

17. Procédé de validation de communications selon la revendication 16, dans lequel ont choisit de façon répétitive des fréquences de transmission différentes, et on met en oeuvre le procédé de validation des communications avec le poste d'abonné avec des transmissions aux fréquences choisies jusqu'à ce que soit déterminée un qualité suffisante des communications de messages.

18. Procédé de validation de communications selon l'une quelconque des revendications précédentes dans lequel, si la qualité des communications est considérée comme étant insuffisante, on choisit une autre des stations de base pour recevoir des messages du dit poste d'abonné, et on met en oeuvre le procédé de validation des communications avec le poste d'abonné par rapport à ladite autre station de base.

19. Procédé de validation de communications selon la revendication 18, dans lequel on choisit de façon répétitive une autre des stations de base, et on met en oeuvre le procédé de validation des communications avec un poste d'abonné par rapport à l'autre station de base choisie, jusqu'à ce que soit déterminée une qualité suffisante des communications de messages.

20. Moyen de communication comprenant une station de base et plusieurs postes d'abonné, la station de base communiquant avec chaque poste d'abonné en envoyant et en recevant des messages en des tranches de temps prédéterminées dans des séquences de temps de longueur fixe, dans lequel la station de base peut agir pendant un temps prédéterminé pour refuser des demandes d'établissement d'appel vers et/ou depuis un premier poste d'abonné, et pendant un temps prédéterminé pour envoyer des messages de contrôle de système au poste d'abonné, la station de base pouvant de plus agir pour vérifier la qualité des communications depuis le premier poste d'abonné et le premier poste d'abonné pouvant agir pour vérifier la qualité des communications provenant de la station de base et, selon la qualité dans les deux directions, pour permettre aux demandes d'établissement d'appel vers ou depuis ledit premier poste d'abonné d'être acceptées.

21. Moyen de communication selon la revendication 20 dans lequel, si la qualité est déterminée comme étant acceptable, la station de base envoie au premier poste d'abonné des messages supplémentaires de contrôle de système.

22. Moyen de communication selon la revendication 21 dans lequel, les messages supplémentaires de contrôle de système comprennent des messages de vérification de validation, pour déterminer si le premier poste d'abonné est de type acceptable.

23. Moyen de communication selon la revendication 21 ou la revendication 22, dans lequel les messages supplémentaires de contrôle de système comprennent des messages de configuration pour contrôler la performance du premier poste d'abonné.

24. Moyen de communication selon l'une quelconque des revendications 21 à 23, dans lequel les messages supplémentaires de contrôle de système sont adressés au premier poste d'abonné en y incluant un code d'identification du premier poste d'abonné.

25. Moyen de communication selon l'une quelconque des revendications 20 à 24 dans lequel, si la qualité des communications est considérée comme étant insuffisante, il est choisi une fréquence de transmission différente vers le poste d'abonné, et on vérifie la qualité des communications utilisant les nouvelles fréquences.

26. Moyen de communication selon l'une quelconque des revendications 20 à 25, comprenant de plus une autre station de base dans laquelle la qualité des communications avec la première station de base est considérée comme étant insuffisante, ladite station de base étant choisie pour recevoir des messages depuis le premier poste d'abonné, et la qualité des communications entre le poste d'abonné et ladite autre station de base étant vérifiée.
